# EUROPEAN PATENT SPECIFICATION

(11) **EP 3 752 450 B1**
(45) Date of publication and mention of the grant of the patent: **21.04.2021**
(21) Application number: 19704825.9
(22) Date of filing: 15.02.2019
(51) Int. Cl.: B67D 7/04, B67D 7/76, B01D 19/00

(54) **DEGASSING SYSTEM FOR A FUEL PUMPING UNIT**
LUFTABSCHEIDESYSTEM FÜR EINE PUMPENEINHEIT
DISPOSITIF DE DÉGAZAGE POUR UNE UNITÉ DE POMPAGE

(30) Priority: 16.02.2018 FR 1851345
(43) Date of publication of application: 23.12.2020
(73) Proprietor: DOVER FUELING SOLUTIONS UK LIMITED, Edinburgh EH3 8EH (GB)
(72) Inventor: BIZIEN, Franck, 76600 Le Havre (FR)
(74) Representative: Fish & Richardson P.C.
(86) International application number: PCT/EP2019/053897
(87) International publication number: WO 2019/158735

(56) References cited:
- EP-A1- 1 862 429
- FR-A1- 2 792 848
- FR-A1- 2 919 855

## Description

The present invention concerns a degassing device for a pumping assembly for fuel distribution equipment and a pumping assembly comprising such a degassing device.

Fuel distribution equipment classically comprises one or more pumping assemblies comprising a degassing device in order to ensure that the measurement of the volume of fuel delivered to the user in fact corresponds to liquid fuel and not to a mixture of liquid fuel and gas (air and petroleum vapors).

The percentage of gas volume allowable in the liquid is defined specifically by regulation R117 of the OIML (French acronym for *Organisation Internationale de Metrologie Légale,* or International Legal Metrology Organization; French acronyms used passim).

Each pumping assembly comprises a pump for circulating the fuel coming from a storage tank.

The degassing device classically comprises a degassing container, specifically Vortex-type, fed with a mixture of liquid fuel/gas through an input pipe connected to the output of the pump and equipped with two fuel evacuation pipes, namely, a lateral pipe for the degassed liquid fuel and an axial pipe for a fraction of gas-enriched fuel.

The degassing device also comprises an atmospheric pressure separation tank connected to the axial pipe of the degassing container in which the liquid fuel enclosed in the gas-enriched fraction is separated by gravity before again being transferred toward the vacuum side of the pump.

This separation tank is equipped with a blow hole making it possible to evacuate separated gases to the outside.

As a general rule, the degassing container has an elongated, cylindrical shape, which makes it possible to create, in its interior, a helicoidal circulation of the liquid fuel/gas mixture coming from the pump which makes it possible, on one hand, to collect degassed fuel through a lateral output pipe and, on the other hand, a fraction of gas-enriched mixture through an axial tube.

This type of degassing system is described, for example, in document EP0357513. According to this prior publication, the degassing container is associated with detection means making it possible to drive distribution of the liquid fuel as a function of its gas content and possibly to stop it, if this content is greater than a predetermined value.

The problem with such a system is related to the fact that, when the fuel entering the degassing container contains only a very small amount of gas, which is the most common operating condition, the fraction sampled by the axial pipe and transferred to the separation tank is always slightly loaded with gas.

This fraction of fuel must remain for a period of time in the separation tank before being recycled to the pump inlet, which considerably diminishes the yield of the distribution apparatus, especially since this slightly gas-loaded liquid tends to lead to the formation of foam in the pump due to its brewing.

For this reason, it is desirable to reduce the flow of the liquid fuel/gas mixture through the axial pipe of the degassing container, which, however, is not possible in practice, when, due to an accident, the fuel is highly loaded with gas, it is necessary that this output pipe have a large enough diameter to provide effective degassing of this fuel.

In order to remedy this problem, it has already been suggested, according to document FR2919855, to connect control means to the degassing container axial pipe making it possible to vary the flow of the gas-enriched fraction sampled by this pipe as a function of its gas content.

Thus, a significant flow of fuel can be sampled and transferred into the separation tank when its gas content is high, and a slower flow when this fuel has only a slight gas load.

These control means comprise a control chamber equipped with an axial opening by which the axial pipe is unblocked, an output connected to the separation tank, and a piston equipped with a diaphragm in fluid communication with the axial opening.

The piston can be moved to the interior of the control chamber according to an X axis direction between an open position of the output, when the amount of gas in the fraction of gas-enriched fuel flowing in the axial pipe is high and a partially closed position of the output, when the amount of gas in the gas-enriched fraction of fuel flowing in the pipe is low.

The piston is subject to the action of a counter-spring which tends to return it to the open position.

However, this solution is not ideal because the piston may sometimes be slanted in the control chamber and remain blocked in this position, leading to a permanent leak of fuel/gas mixture, even if it is low in gas.

The separation tank does not have time to decant all of the fuel, leading to a fuel overflow through the blow hole of the tank and therefore to a fuel leak.

Another solution consists of specifying a central guide rod to guide the piston and close its central orifice when the fuel/gas mixture is low in gas.

However, this solution presents the same problems as those cited above, with, in addition, more risk of slanting, the risk of blocking when particles become lodged between the piston and the central rod.

These solutions also have a problem with excessive permanent leakage when the piston is closed and of piston oscillation, since it is given that one side of the latter is connected to the pump input under pressure and that the other side is connected to the atmosphere.

The object of the present invention is to remedy these problems by proposing a degassing device that is more efficient than those of the prior art, in which the risk of blockage is avoided.

The invention concerns a degassing device for a pumping assembly with a fuel distribution device.

The pumping assembly comprises a pump for circulating the fuel coming from a storage tank.

The degassing device comprises a degassing container fed with a liquid fuel/gas mixture delivered at the output of the pump. The degassing container comprises a lateral pipe to evacuate the degassed liquid fuel to a distribution nozzle and an axial pipe to evacuate a fraction of the gas-enriched fuel to a separation tank in which the gas-enriched fraction is separated before being evacuated to the pump input.

The degassing device also comprises control means connected to the degassing container axial pipe making it possible to vary the flow of the gas-enriched fraction sampled by this pipe as a function of its gas content. These control means comprise a control chamber equipped with an axial opening by which the axial pipe is unblocked, an output connected to the separation tank, and a piston equipped with a diaphragm in fluid communication with the axial opening. The piston can be moved to the interior of the control chamber according to an X axis direction between an open position of the output when the amount of gas in the fraction of gas-enriched fuel flowing in the axial pipe is high and a partially closed position from the output when the amount of gas in the gas-enriched fraction of fuel flowing in the pipe is low. The piston is subject to the action of a counter-spring which tends to return it to the open position.

According to the invention, the control means comprise guiding means making it possible to guide the moving piston according to the X axis direction between the open and closed positions. The guiding means are positioned upstream of the axial opening of the control chamber.

Thus, the invention provides a more efficient degassing device, reducing the risks of blocking the piston and therefore the risks of fuel overflowing through the blow hole of the separation tank of the pumping assembly when the degassing device is blocked in the open position instead of reclosing and of avoiding delivering un-degassed fuel to the vehicle when the degassing device is blocked in the closed position, instead of being in the open position.

In fact, the guiding means make it possible to effectively guide the piston while moving in order to keep it from slanting, and therefore, from blocking.

On the other hand, since the guiding means are outside of the direct trajectory of the flow of fuel, particles or debris which may be present in the fuel cannot become lodged between the piston and the guiding means and lead to blocking the piston.

Preferably, the piston comprises a circular, peripheral wall defining a cavity into which the axial opening opens. The axial opening is positioned in relation to and aligned with the piston diaphragm. The counter spring is compressed between a front piston wall and an axial wall formed in the control chamber.

The degassing device comprises a central tube extending the axial pipe to the interior of the control chamber and to the interior of the piston cavity , following the X axis direction such that this axial opening may be formed at the extremity of the central tube and positioned at the interior of the piston cavity. The guiding means comprise a guiding canal formed between a peripheral wall of the central tube and an internal wall of the control chamber. The peripheral wall of the piston slides between and along the peripheral wall and the internal wall.

Advantageously, the axial opening of the central tube may be defined by a serrated edge forming an abutment against a front piston wall when it is in the maximally open position.

The serrated edge makes it possible, when the piston is in the maximally open position, to increase the pressure application surface of the fuel flow on the piston front wall.

Starting from the maximally open position, this makes it possible to close the piston progressively, smoothly, given that the fuel pressure on the front wall is evenly distributed over the internal surface of the front wall of the piston.

The degassing device may comprise an outflow cannula positioned between the piston and the output comprising an internal channel aligned with the piston diaphragm and an external channel surrounding the internal channel. The internal channel is in permanent fluid communication with the piston diaphragm and the axial opening of the central tube and the external channel closed by the front piston wall when the amount of gas in the fraction of gas-enriched fuel is low, and open when the amount of gas in the gas-enriched fuel is high.

Preferable, when the piston is in the closed position, an edge defining the piston diaphragm is in contact with a front edge specified on the central tube of the output cannula in order to provide water-tightness between the piston cavity and the external channel of the output cannula.

A balanced flow is created from one part to the other of the piston front wall, when it is in closed position, which makes it possible to avoid (its slanting).

Thus, the invention makes it possible to obtain a stable piston position when the degasser is at rest (closed position), which is most of the time, in order to avoid piston oscillations and wear due to shocks against other parts.

Advantageously, the output cannula forms an abutment in contact with the piston front wall in order to stop its flow when it is in the closed position.

The abutment is formed by a peripheral flange specified for the internal wall of the control chamber.

This provides a more stable closed position, without the risk of the piston slanting, which could create a breach in water tightness between the piston and the external channel of the output cannula.

The invention also concerns a pumping assembly for a fuel distribution device comprising a pump for the circulation of fuel coming from a storage tank.

According to the invention, the pumping assembly comprises a degassing device as defined above.

The characteristics of the equipment which is the subject of the invention will be described in detail by referring to the annexed nonlimiting drawings, in which:
- Figure 1 schematically represents a fuel distribution device comprising a pumping assembly equipped with a degassing device;
- Figure 2 is a cross-section of a degassing device comprising control means in closed position according to the invention;
- Figure 3 is a detailed cross-section view of said control means;
- Figure 4 is a cross-section of the degassing device, when the control means are in the open position;
- Figure 5 is another cross-section of the degassing device, when the control means are in open position.

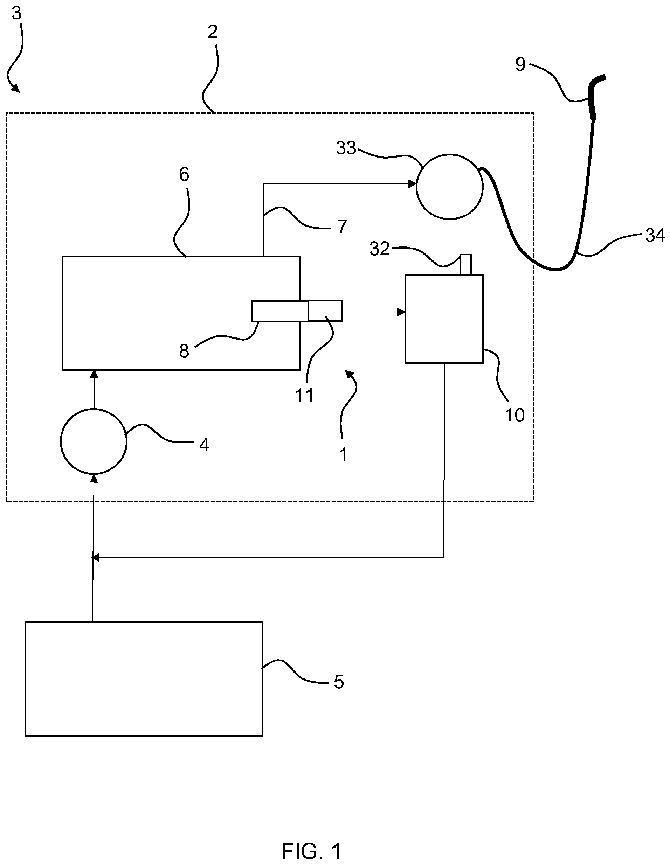

Figure 1 schematically represents a fuel distribution device 3 comprising a pumping assembly 2.

The fuel distribution device 3 may comprise several pumping assemblies 2, each intended to deliver a type of fuel (gasoline or diesel, for example).

The pumping assembly 2 comprises a pump 4 for circulating the fuel coming from a storage tank 5.

The pump 4 may be a gear pump or a vane pump, for example.

The pumping assembly 2 comprises a degassing device 1 comprising a degassing container 6 fed with a liquid fuel/gas mixture delivered at the output of the pump 4.

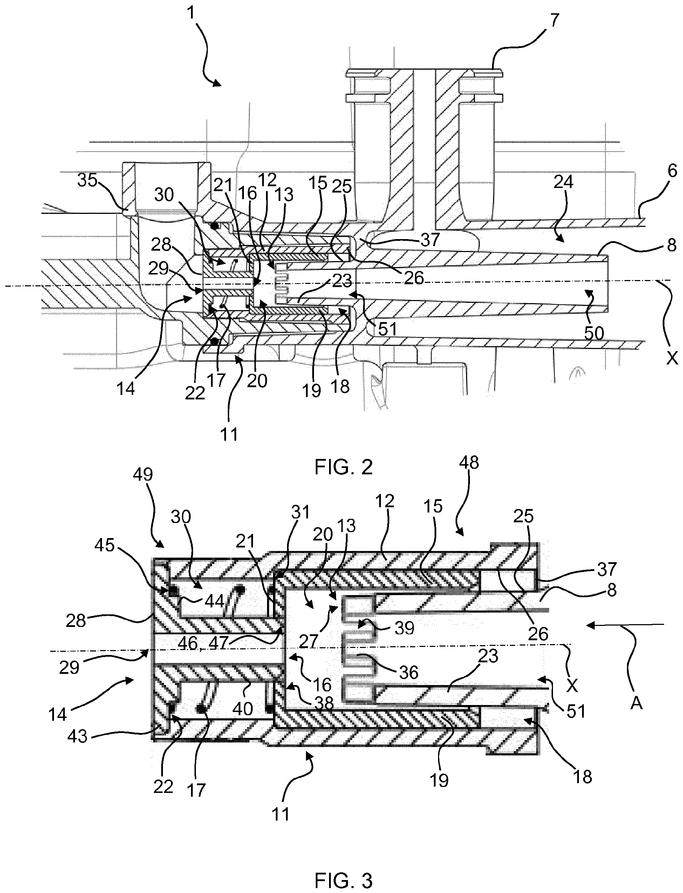

The degassing container 6, as illustrated in figure 2, comprises a lateral pipe 7 to evacuate the degassed liquid fuel to a distribution nozzle 9.

The degassing container 6 also comprises an axial pipe 8 to evacuate a fraction of gas-enriched fuel to a separation tank 10 in which the liquid fuel enclosed in the gas-enriched fraction is separated before being evacuated to the pump input 4.

The degassing container 6 is a vortex-type. The liquid/gas fuel mixture circulates in the degassing container 6 in a helicoidal movement forming a cyclone.

The highest density fraction of the mixture (lower gas content) can be found at the exterior of the cyclone and circulates along the interior wall of the degassing container 6, while the lower density fraction (gas-enriched) can be found at the interior of the cyclone and returns to the center of the degassing container 6.

The axial pipe 8 is positioned at the center of the degassing container 6 to recover this gas-enriched fraction.

The axial pipe 8 is circular in cross section (tube-shaped) and extends according to an X axis direction inside the degassing container 6.

The axial pipe 8 is positioned opposite the lateral pipe 7, which extends perpendicularly in relation to the axial pipe 8.

An evacuation channel 24 is formed between the axial pipe 8 and the degassing container 6. The densest fraction of the liquified/gas fuel mixture circulates across this evacuation channel 24 to lateral pipe 7.

This fraction of the mixture then circulates across a gage 33 before circulating across a flexible fuel line 34 and a nozzle 9, delivering the fuel to the tank of a vehicle.

The degassing device 1 comprises control means 11 connected to the axial pipe 8 of the degassing container 6 making it possible to vary the flow of the gas-enriched fraction sampled by this pipe as a function of its gas content.

These control means 11 comprise a control chamber 12 equipped with an axial opening 13 by which the axial pipe 8 is unblocked, and an output 14 connected to the separation tank 10 by an exit channel 35.

The control means 11 also comprise a piston 15 equipped with a diaphragm 16 in fluid communication with the axial opening 13.

The piston 15 can be moved to the interior of the control chamber 12 according to an X axis direction between an open position of the output 14 when the amount of gas in the fraction of gas-enriched fuel flowing in the axial pipe 8 is high and a partially closed position of the output 14 when the amount of gas in the gas-enriched fraction of fuel flowing in the pipe 8 is low.

The piston 15 is subject to the action of a counter-spring 17 which tends to return it to the open position.

The piston 15 partially closes the output 14, so as to allow a permanent fuel leak flow.

The piston 15 is cylindrical in shape. Its diaphragm 16 is centered in relation to the X axis direction and is aligned with the axial opening 13. The diaphragm 16 is positioned in relation to axial opening 13.

The fuel exits the output 14 of the control chamber 12 and enters the separation tank 10, which is at atmospheric pressure.

This separation tank 10 is equipped with a blow hole 32 making it possible to evacuate separated gases to the outside.

The liquid fuel contained in the gas-enriched fraction is separated by gravity in the separation tank 10 before being again transferred to the pump 4.

According to the invention, the control means 11 comprise guiding means 18 making it possible to guide the moving piston 15 according to the X axis direction between the open and closed positions.

The guiding means 18 are positioned upstream of the axial opening 13 of the control chamber 12 in relation to the direction of circulation A of the fuel, namely, in front of or behind the axial opening 13.

The guiding means 18 are positioned between the axial pipe 8 and the axial opening 13.

The piston 15 comprises a circular, peripheral wall 19 defining a cavity 20 into which the axial opening opens 13.

The counter spring 17 is compressed between a front wall 21 of the piston 15 and an axial wall 22 formed in the control chamber 12.

The counter spring 17 is centered in relation to the X axis direction.

Advantageously, the degassing device 1 comprises a central tube 23 extending the axial pipe 8 to the interior of the control chamber 12 and to the interior of the piston 15 cavity 20, following the X axis direction such that this axial opening 13 may be formed at the extremity of the central tube 23 and positioned at the interior of the piston 15 cavity 20.

The central tube 23 is surrounded by the peripheral wall 19 of the piston 15.

The central tube 23 is circular in cross section.

The axial pipe 8 is crossed by a first channel 50. The central tube 23 is crossed by a second channel 51. The first channel 50 and the second channel 51 are connected. They may have the same diameter.

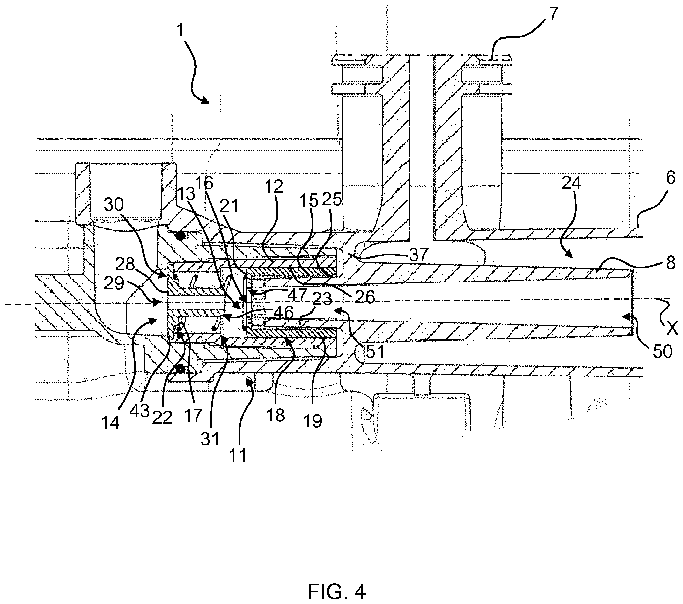

Preferably, and as represented in figures 2 and 4, the first 50 and second 51 channels form a truncated cone shape with a cross section that is reduced in the direction of fuel A circulation.

The guiding means 18 comprise an annular guiding channel 18 formed between a peripheral wall 25 of the central tube 23 and an internal wall 26 defining the control chamber 12.

The peripheral wall 19 of the piston 15 slides axially between and along the peripheral wall 25 and the internal wall 26.

Preferably, the external diameter of the peripheral wall 19 of the piston 15 and the internal diameter of the internal wall 26 of the control chamber 12 are very close, such that the piston 15 may be guided by the internal wall 26 of the control chamber 12. In other words, the peripheral wall 19 of the piston 15 is closer to the internal wall 26 of the control chamber 12, than to the peripheral wall 25 of the central tube 23.

As a variation, the opposite is also possible. The peripheral wall 19 of the piston 15 may be closer to the peripheral wall 25 of the central tube 23 than to the internal wall 26 of the control chamber 12.

The guiding channel 18 extends from a separation wall 37 separating the control chamber 12 from the degassing container 6 to the axial opening 13.

The central tube 23 may have a circular cross section with an external diameter that is constant over its entire length. As a result, the guiding channel 18 has a constant cross section.

As a variation, the central tube 23 may have a truncated cone shape with a diameter that is greater close to the separation wall 37 and a diameter that is smaller at the site of the axial opening 13.

As a result, the guiding channel 18 has a variable annular cross section along its length. The cross section of the guiding channel 18 is smaller at the site of the separation wall 37. It increases in the direction of the axial opening 13.

The length of the guiding channel 18 is greater than or equal to the length of the circular peripheral wall 19 of the piston 15.

The thickness of the peripheral wall 19 of the piston 15 is slightly less than the space formed between the peripheral wall 25 of the central tube 23 and the internal wall 26 of the control chamber 12 in order to allow the piston 15 to slide.

The space between the peripheral wall 19 of the piston 15 and the peripheral wall 25 and the space between the peripheral wall 19 of the piston 15 and the internal wall 26 are minimized in order to prevent particles from penetrating the interior of the guiding channel 18, while remaining large enough to make sliding of the piston 15 possible.

The central tube 23 serves both to channel the flow of fuel toward the diaphragm 16 of the piston 15 and to partly define the guiding channel 18.

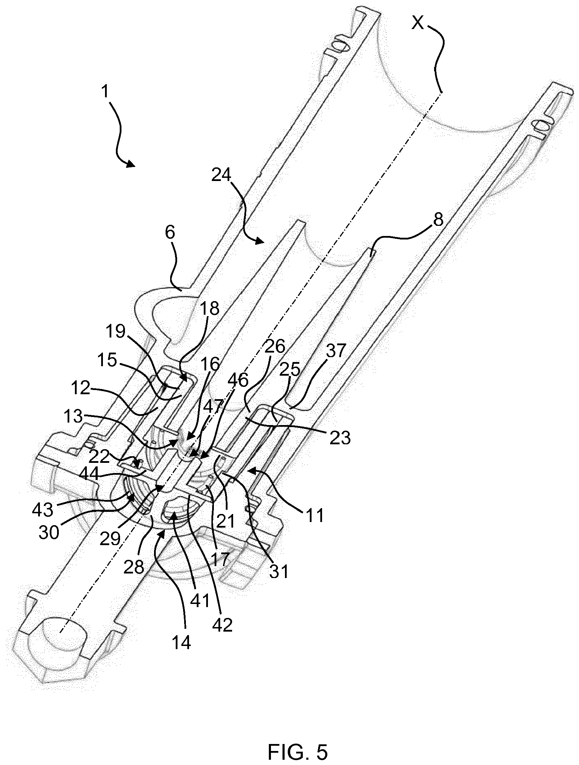

The axial opening 13 of the central tube 23 is defined by an edge 27 forming an abutment against the piston 15 when it is in the maximally open position (high gas content mixture), as illustrated in figures 4 and 5.

More specifically, it is an internal surface 38 of the front wall 21 of the piston 15 that is in contact with the edge 27.

Preferably, the edge 27 is a serrated edge 27 comprising a succession of serrations 36 separated by troughs 39.

The serrated edge 27 makes it possible, when the piston 15 is in the maximally open position, to increase the pressure application surface of the fuel flow on the piston 15 front wall 21.

This makes it possible, starting from the maximally open position, to close the piston 15 progressively, smoothly, given that the fuel pressure on the front wall 21 is routinely distributed over the internal surface 38 of the front wall 21 of the piston 15.

The control means 11 comprise an output cannula 28 positioned between the piston 15 and the output 14.

The axial wall 22 of the control chamber 12 is formed on the output cannula 28.

The output cannula 28 comprises an internal channel 29 aligned with the diaphragm 16 of the piston 15 and the axial opening 13. The internal channel 29 is centered in relation to the X axis direction.

The internal channel 29 is in permanent fluid communication with the diaphragm 16 of the piston 15 and the axial opening 13 of the axial pipe 8.

The internal channel 29 makes it possible to form a fuel leak, even when piston 15 is in the closed position (low gas content), as shown in Fig. 3.

The internal channel 29 is formed in a central tube 40 of the circular cross-section. The central tube 40 is surrounded by the counter spring 17.

The output channel 28 also comprises an external channel 30 surrounding the central channel 29 coaxially.

The external channel 30 has an annular shape. It is defined by the internal wall 26 of the control chamber 12 and the central tube 40.

The external channel 30 is closed by the front wall 21 of the piston 15 when the amount of gas in the fraction of gas-enriched fuel is low and opened when the amount of gas in the fraction of gas-enriched fuel is high.

The output cannula 28 comprises at a downstream extremity comprising several cells 41 positioned downstream of the central tube 40, as shown in figure 5. The cells 41 are separated from each other by connected components 42 connecting the central tube 40 with a peripheral ring 43. In this example, the output cannula 28 comprises four cells 41.

The counter spring 17 comprises a downstream extremity 45 which abuts against the connecting components 42.

A flange 44 is formed around the central tube 40 and at its base. The downstream extremity 45 of the counter spring 17 is positioned around this flange 44 in order to hold the counter spring 17.

The central tube 40 comprises a frontal edge 46.

Preferably, this frontal edge 46 is beveled at an angle less than 90° in relation to the X axis direction.

The diaphragm 16 is defined by an edge 47.

When the piston 15 is in closed position, the edge 47 of the piston 15 surrounds the frontal edge 46 of the central tube 40. These edges 46, 47 are not in contact. There is a little play between these edges 46, 47.

The output cannula 28 forms an abutment for the frontal wall 21 of the piston 15, when it is in the closed position.

According to one possible embodiment, the frontal edge 46 of the central tube 40 acts as an abutment to stop the movement of the piston 15 (not shown).

According to another preferred embodiment, the abutment is formed by a peripheral flange 31 specified for the internal wall 26 of the control chamber 12. The peripheral flange 31 is preferably circular.

The control chamber 12 comprises an upstream portion 48 and a downstream portion 49 with a smaller diameter than the upstream portion 48, as shown in figure 3.

The peripheral flange 31 is obtained by the junction formed between the upstream 48 and downstream 49 portions.

The frontal wall 21 of the piston 15 abuts against the peripheral flange 31 to stop the movement of the piston 15 at its closed position.

This embodiment is preferred to the preceding because it leads to a more stable closed position, without the risk of the piston 15 slanting, which could create a breach in water tightness between the piston 15 and the external channel 30 of the output cannula 28.

Advantageously, the piston 15 and the control chamber 12 are of metal.

Therefore, there is metal/metal contact making it possible to avoid matting of the peripheral flange 31 leading to blocking the piston 15 in the closed position.

## Claims

1. Degassing device (1) for a pumping assembly (2) of a fuel distribution device (3), said pumping assembly comprising a pump (4) to circulate the fuel coming from a storage tank (5), said degassing device (1) comprising:
- a degassing container (6) fed by a liquid/ gas fuel mixture exiting the pump (4), the degassing container (6) comprising a lateral pipe (7) configured to evacuate the degassed liquid fuel to a distribution nozzle (9) and an axial pipe (8) configured to evacuate a fraction of the gas-enriched fuel to a separation tank (10) in which the gas-enriched fraction is separated before being evacuated to the pump input (4),
- control means (11) connected to the axial pipe (8) of the degassing container (6) to make it possible to vary the flow of the gas-enriched fraction sampled by said axial pipe (8) as a function of its gas content, the control means (11) comprising a control chamber (12) equipped with an axial opening (13) through which the axial pipe (8) opens, an output (14) connected to the separation tank (10) and a piston (15) equipped with a diaphragm (16) in fluid communication with the axial opening (13), said piston (15) being able to move to the interior of the control chamber (12) following an X axis direction between
an open position of the output (14) when the amount of gas in the fraction of gas-enriched fuel in the axial pipe (8) is high and
a partially closed position of the output (14) when the amount of gas in the fraction of gas-enriched fuel in the axial pipe (8) is low,
said piston (15) being subject to the action of a counter spring (17) which tends to return it to the open position,
**characterized in that** the control means (11) comprise guiding means (18) making it possible to guide the piston (15) in movement following the (X) axis direction between the open and partially closed positions of the output (14), said guiding means being upstream of the axial opening (13) of the control chamber (12).

2. Degassing device (1) according to claim 1, **characterized in that** the piston (15) comprises a circular peripheral wall (19) defining a cavity (20) in which the axial opening (13) opens, the axial opening (13) being positioned opposite to, and aligned with, the diaphragm (16) of the piston (15), the counter spring (17) being in compression between a front wall (21) of the piston (15) and an axial wall (22) formed in the control chamber (12).

3. Degassing device (1) according to claim 2, **characterized in that** it comprises a central tube (23) extending the axial pipe (8) to the interior of the control chamber (12) and to the interior of the cavity (20) of the piston (15) following the (X) axis direction, such that the axial opening (13) may be formed at one end of the central tube (23) and positioned in the interior of the cavity (20) of the piston (15), the guiding means (18) comprising a guiding channel (18) formed between a peripheral wall (25) of the central tube (23) and an internal wall (26) of the control chamber (12), the peripheral wall (19) of the piston (15) sliding between and along said peripheral wall (25) and the internal wall (26).

4. Degassing device (1) according to claim 3, **characterized in that** the axial opening (13) of the central tube (23) is defined by a serrated edge (27) forming an abutment against a front wall (21) of the piston (15) when it is in the maximally open position.

5. Degassing device (1) according to any one of claims 1 to 4, **characterized in that** it comprises an output cannula (28) positioned between the piston (15) and the output (14) comprising an internal channel (29) aligned with the diaphragm (16) of the piston (15) and an external channel (30) surrounding the inner channel (29), the inner channel (29) being in permanent fluid communication with the diaphragm (16) of the piston (15) and the axial opening (13) of the central tube (23) and the external channel (30) being closed by the frontal wall (21) of the piston (15), when the amount of gas in the fraction of gas-enriched fuel is low, and open when the amount of gas in the fraction of gas-enriched fuel is high.

6. Degassing device (1) according to claim 5, **characterized in that**, when the piston (15) is in the partially closed position, an edge (47) defining the piston (15) diaphragm (16) is in contact with a front edge (46) specified on the central tube (40) of the output cannula (28) in order to provide water-tightness between the piston (15) cavity (20) and the external channel (30) of the output cannula (28).

7. Degassing device (1) according to either one of claims 5 or 6, **characterized in that** the output cannula (28) forms an abutment in contact with the piston (15) front wall (21) in order to stop its flow when it is in the closed position.

8. Degassing device (1) according to either of claims 5 or 6, **characterized in that** the abutment is formed by a peripheral flange (31) specified for the internal wall (26) of the control chamber (12).

9. Pumping assembly (2) for a fuel distribution device (3) comprising a pump (4) circulating the fuel coming from a storage tank (5), **characterized in that** it comprises a degassing device (1) as claimed in any one of claims 1 to 8, said degassing device (1) comprising a degassing container (6) fed by a liquid/gas fuel mixture delivered from the output of the pump (1), the degassing container (6) comprising a lateral pipe (7) to evacuate the degassed liquid fuel to a distribution nozzle (9) and an axial pipe (8) to evacuate a fraction of the gas-enriched fuel to a separation tank (10) in which the fraction of liquid fuel enclosed in the gas-enriched fraction is separated before being evacuated to the pump input (4).

## Patentansprüche

1. Entgasungsvorrichtung (1) für eine Pumpenanordnung (2) einer Kraftstoffverteilervorrichtung (3), wobei die Pumpenanordnung eine Pumpe (4) umfasst, um von einem Speichertank (5) kommenden Kraftstoff zu zirkulieren, wobei die Entgasungsvorrichtung (1) Folgendes umfasst:
- einen Entgasungsbehälter (6), der von einem aus der Pumpe (4) austretenden Flüssigkeits-/Gaskraftstoffgemisch gespeist wird, wobei der Entgasungsbehälter (6) ein seitliches Rohr (7), das dazu ausgelegt ist, den entgasten Flüssigkraftstoff zu einer Verteilerdüse (9) abzusaugen, und ein axiales Rohr (8), das dazu ausgelegt ist, einen Teil des mit Gas angereicherten Kraftstoffs in einen Abscheidungstank (10), in dem der mit Gas angereicherte Teil abgeschieden wird, bevor er in den Pumpeneinlass (4) abgesaugt wird, abzusaugen, umfasst,
- eine Steuerungseinrichtung (11), die mit dem axialen Rohr (8) des Entgasungsbehälters (6) verbunden ist, um das Variieren der Strömung des vom axialen Rohr (8) als Funktion dessen Gasgehalts bemusterten mit Gas angereicherten Teils zu ermöglichen, wobei die Steuerungseinrichtung (11) eine Steuerungskammer (12) umfasst, die mit einer axialen Öffnung (13) ausgestattet ist, durch die sich das axiale Rohr (8) öffnet, wobei ein Auslass (14) mit dem Abscheidungstank (10) verbunden ist und ein Kolben (15) mit einer Membran (16) ausgestattet ist, die mit der axialen Öffnung (13) fluidisch verbunden ist,
wobei der Kolben (15) dazu funktionsfähig ist, sich in eine X-Achsenrichtung zwischen einer geöffneten Stellung des Auslasses (14), wenn die Gasmenge in dem Teil des mit Gas angereicherten Kraftstoffs im axialen Rohr (8) hoch ist, und einer teilweise geschlossenen Stellung des Auslasses (14), wenn die Gasmenge in dem Teil des mit Gas angereicherten Kraftstoffs im axialen Rohr (8) niedrig ist, zum Inneren der Steuerungskammer (12) zu bewegen,
wobei der Kolben (15) der Wechselwirkung einer Gegendruckfeder (17) ausgesetzt ist, die ihn in die geöffnete Stellung zurück bringt,
**dadurch gekennzeichnet, dass** die Steuerungseinrichtung (11) eine Führungseinrichtung (18) umfasst, die es ermöglicht, den Kolben (15) in einer der X-Achsenrichtung folgenden Bewegung zwischen der geöffneten und teilweise geschlossenen Stellung des Auslasses (14) zu führen, wobei die Führungseinrichtung der axialen Öffnung (13) der Steuerungskammer (12) vorgelagert ist.

2. Entgasungsvorrichtung (1) nach Anspruch 1, **dadurch gekennzeichnet, dass** der Kolben (15) eine kreisförmige, umlaufende Wand (19) umfasst, die einen Hohlraum (20) definiert, in den sich die axiale Öffnung (13) öffnet, wobei die axiale Öffnung (13) der Membran (16) des Kolbens (15) entgegengesetzt und damit ausgerichtet angeordnet ist, wobei die Gegendruckfeder (17) zwischen einer Stirnwand (21) des Kolbens (15) und einer in der Steuerungskammer (12) ausgebildeten Axialwand (22) zusammengedrückt wird.

3. Entgasungsvorrichtung (1) nach Anspruch 2, **dadurch gekennzeichnet, dass** sie ein mittiges Rohr (23) umfasst, das das axiale Rohr (8) zum Inneren der Steuerungskammer (12) und zum Inneren des Hohlraums (20) des Kolbens (15) der X-Achsenrichtung folgend verlängert, sodass die axiale Öffnung (13) an einem Ende des mittigen Rohres (23) ausgebildet und im Inneren des Hohlraums (20) des Kolbens (15) angeordnet werden kann, wobei die Führungseinrichtung (18) einen Führungskanal (18) umfasst, der zwischen einer umlaufenden Wand (25) des mittigen Rohrs (23) und einer Innenwand (26) der Steuerungskammer (12) ausgebildet ist, wobei sich die umlaufende Wand (19) des Kolbens (15) zwischen und entlang der umlaufenden Wand (25) und der Innenwand (26) verschiebt.

4. Entgasungsvorrichtung (1) nach Anspruch 3, **dadurch gekennzeichnet, dass** die axiale Öffnung (13) des mittigen Rohrs (23) durch eine gezahnte Kante (27) definiert ist, die einen Anschlag gegen eine Stirnwand (21) des Kolbens (15) ausbildet, wenn er sich in der maximal geöffneten Stellung befindet.

5. Entgasungsvorrichtung (1) nach einem der Ansprüche 1 bis 4, **dadurch gekennzeichnet, dass** sie eine Auslasskanüle (28) umfasst, die zwischen dem Kolben (15) und dem Auslass (14) angeordnet ist, die einen inneren Kanal (29), der mit der Membran (16) des Kolbens (15) ausgerichtet ist, und einen den inneren Kanal (29) umgebenden äußeren Kanal (30) umfasst, wobei der innere Kanal (29) in dauerhafter fluidischer Verbindung mit der Membran (16) des Kolbens (15) und der axialen Öffnung (13) des mittigen Rohrs (23) ist und der äußere Kanal (30) durch die Stirnwand (21) des Kolbens (15) geschlossen ist, wenn die Gasmenge des Teils des mit Gas angereicherten Kraftstoffs niedrig ist, und geöffnet ist, wenn die Gasmenge des Teils des mit Gas angereicherten Kraftstoffs hoch ist.

6. Entgasungsvorrichtung (1) nach Anspruch 5, **dadurch gekennzeichnet, dass**, wenn sich der Kolben (15) in der teilweise geschlossenen Stellung befindet, eine die Membran (16) des Kolbens (15) definierende Kante (47) eine auf dem mittigen Rohr (40) der Auslasskanüle (28) vorgesehene Vorderkante (46) berührt, um eine Wasserdichtigkeit zwischen dem Hohlraum (20) des Kolbens (15) und dem äußeren Kanal (30) der Auslasskanüle (28) vorzusehen.

7. Entgasungsvorrichtung (1) nach einem der Ansprüche 5 oder 6, **dadurch gekennzeichnet, dass** die Auslasskanüle (28) einen Anschlag ausbildet, der die Stirnwand (21) des Kolbens (15) berührt, um dessen Strömung zu stoppen, wenn er sich in der geschlossenen Stellung befindet.

8. Entgasungsvorrichtung (1) nach einem der Ansprüche 5 oder 6, **dadurch gekennzeichnet, dass** der Anschlag durch einen umlaufenden Flansch (31) ausgebildet ist, der für die innere Wand (26) der Steuerungskammer (12) vorgesehen ist.

9. Pumpenanordnung (2) für eine Kraftstoffverteilungsvorrichtung (3), eine Pumpe (4), die den von einem Speichertank (5) kommenden Kraftstoff zirkuliert, umfassend, **dadurch gekennzeichnet, dass** sie eine Entgasungsvorrichtung (1) nach einem der Ansprüche 1 bis 8 umfasst, wobei die Entgasungsvorrichtung (1) einen Entgasungsbehälter (6) umfasst, der durch ein Flüssigkeits-/Gaskraftstoffgemisch gespeist wird, das vom Auslass der Pumpe (1) zugeführt wird, wobei der Entgasungsbehälter (6) ein seitliches Rohr (7), um den entgasten Flüssigkraftstoff zu einer Verteilerdüse (9) abzusaugen, und ein axiales Rohr (8), um einen Teil des mit Gas angereicherten Kraftstoffs an einen Abscheidungstank (10) abzusaugen, in dem der Teil des im mit Gas angereicherten Kraftstoffs enthaltenen Flüssigkraftstoffs abgeschieden wird, bevor er in den Pumpeneinlass (4) abgesaugt wird, umfasst.

## Revendications

1. Dispositif de dégazage (1) pour un ensemble de pompage (2) d'un dispositif de distribution de carburant (3), ledit ensemble de pompage comprenant une pompe (4) pour faire circuler le carburant provenant d'un réservoir de stockage (5), ledit dispositif de dégazage (1) comprenant :
- une enceinte de dégazage (6) alimentée par un mélange carburant liquide/gaz sortant de la pompe (4), l'enceinte de dégazage (6) comprenant une conduite latérale (7) configurée pour évacuer le carburant liquide dégazé jusqu'à un pistolet de distribution (9) et une conduite axiale (8) configurée pour évacuer une fraction du carburant enrichi en gaz jusqu'à un réservoir de séparation (10) dans lequel la fraction enrichie en gaz est séparée avant d'être évacuée jusqu'à l'entrée de la pompe (4),
- des moyens de régulation (11) reliés à la conduite axiale (8) de l'enceinte de dégazage (6) pour permettre de faire varier le débit de la fraction enrichie en gaz échantillonnée par ladite conduite axiale (8) en fonction de sa teneur en gaz, les moyens de régulation (11) comprenant une chambre de régulation (12) munie d'une ouverture axiale (13) dans laquelle débouche la conduite axiale (8), une sortie (14) reliée au réservoir de séparation (10) et un piston (15) muni d'une membrane (16) en communication fluidique avec l'ouverture axiale (13),
ledit piston (15) étant apte à se déplacer à l'intérieur de la chambre de régulation (12) suivant une direction d'axe X entre
une position ouverte de la sortie (14) lorsque la quantité de gaz dans la fraction de carburant enrichi en gaz dans la conduite axiale (8) est élevée, et
une position partiellement fermée de la sortie (14) lorsque la quantité de gaz dans la fraction de carburant enrichi en gaz dans la conduite axiale (8) est faible,
ledit piston (15) étant soumis à l'action d'un ressort antagoniste (17) qui tend à le renvoyer dans la position ouverte,
**caractérisé en ce que** les moyens de régulation (11) comprennent des moyens de guidage (18) permettant de guider le piston (15) en déplacement suivant la direction d'axe (X) entre les positions ouverte et partiellement fermée de la sortie (14), lesdits moyens de guidage se trouvant en amont de l'ouverture axiale (13) de la chambre de régulation (12).

2. Dispositif de dégazage (1) selon la revendication 1, **caractérisé en ce que** le piston (15) comprend une paroi périphérique circulaire (19) définissant une cavité (20) dans laquelle débouche l'ouverture axiale (13), l'ouverture axiale (13) étant positionnée à l'opposé de la membrane (16) du piston (15) et alignée avec elle, le ressort antagoniste (17) étant en compression entre une paroi avant (21) du piston (15) et une paroi axiale (22) ménagée dans la chambre de régulation (12).

3. Dispositif de dégazage (1) selon la revendication 2, **caractérisé en ce qu'**il comprend un tube central (23) prolongeant la conduite axiale (8) à l'intérieur de la chambre de régulation (12) et à l'intérieur de la cavité (20) du piston (15) suivant la direction d'axe (X), de façon à ce que l'ouverture axiale (13) puisse être ménagée à une extrémité du tube central (23) et positionnée à l'intérieur de la cavité (20) du piston (15), les moyens de guidage (18) comprenant un canal de guidage (18) ménagé entre une paroi périphérique (25) du tube central (23) et une paroi interne (26) de la chambre de régulation (12), la paroi périphérique (19) du piston (15) coulissant entre ladite paroi périphérique (25) et la paroi interne (26) et le long de celles-ci.

4. Dispositif de dégazage (1) selon la revendication 3, **caractérisé en ce que** l'ouverture axiale (13) du tube central (23) est définie par un bord dentelé (27) formant une butée contre une paroi avant (21) du piston (15) lorsqu'il occupe la position ouverte au maximum.

5. Dispositif de dégazage (1) selon l'une quelconque des revendications 1 à 4, **caractérisé en ce qu'**il comprend une canule de sortie (28) positionnée entre le piston (15) et la sortie (14) comprenant un canal interne (29) aligné avec la membrane (16) du piston (15) et un canal externe (30) entourant le canal intérieur (29), le canal intérieur (29) étant en communication fluidique permanente avec la membrane (16) du piston (15) et l'ouverture axiale (13) du tube central (23), et le canal externe (30) étant fermé par la paroi frontale (21) du piston (15) lorsque la quantité de gaz dans la fraction de carburant enrichi en gaz est faible et ouvert lorsque la quantité de gaz dans la fraction de carburant enrichi en gaz est élevée.

6. Dispositif de dégazage (1) selon la revendication 5, **caractérisé en ce que**, lorsque le piston (15) occupe la position partiellement fermée, un bord (47) définissant la membrane (16) du piston (15) est au contact d'un bord avant (46) prévu sur le tube central (40) de la canule de sortie (28) dans le but d'assurer une étanchéité à l'eau entre la cavité (20) du piston (15) et le canal externe (30) de la canule de sortie (28).

7. Dispositif de dégazage (1) selon l'une ou l'autre des revendications 5 ou 6, **caractérisé en ce que** la canule de sortie (28) forme une butée en contact avec la paroi avant (21) du piston (15) dans le but d'arrêter son écoulement lorsqu'il occupe la position fermée.

8. Dispositif de dégazage (1) selon l'une ou l'autre des revendications 5 ou 6, **caractérisé en ce que** la butée est formée par un rebord périphérique (31) prévu pour la paroi interne (26) de la chambre de régulation (12).

9. Ensemble de pompage (2) pour un dispositif de distribution de carburant (3) comprenant une pompe (4) faisant circuler le carburant arrivant d'un réservoir de stockage (5), **caractérisé en ce qu'**il comprend un dispositif de dégazage (1) tel que revendiqué dans l'une quelconque des revendications 1 à 8, ledit dispositif de dégazage (1) comprenant une enceinte de dégazage (6) alimentée par un mélange carburant liquide/gaz refoulé à la sortie de la pompe (1), l'enceinte de dégazage (6) comprenant une conduite latérale (7) pour évacuer le carburant liquide dégazé jusqu'à un pistolet de distribution (9) et une conduite axiale (8) pour évacuer une fraction du carburant enrichi en gaz jusqu'à un réservoir de séparation (10) dans lequel la fraction de carburant liquide renfermée dans la fraction enrichie en gaz est séparée avant d'être évacuée jusqu'à l'entrée de la pompe (4).
